Europäisches Patentamt

European Patent Office

Office européen des brevets

(19)

(11) Veröffentlichungsnummer: **0 050 272**
A1

# (12) EUROPÄISCHE PATENTANMELDUNG

(21) Anmeldenummer: **81108057.1**

(22) Anmeldetag: **08.10.81**

(51) Int. Cl.³: **A 01 F 25/20**, G 01 G 19/08

(30) Priorität: **21.10.80 DE 3039672**

(43) Veröffentlichungstag der Anmeldung: **28.04.82** Patentblatt 82/17

(84) Benannte Vertragsstaaten: **AT BE CH DE FR LI NL**

(71) Anmelder: **Bonekamp, Berthold, von-Schonebeck-Ring 84, D-4400 Münster-Nienberge (DE)**

(72) Erfinder: **Bonekamp, Berthold, von-Schonebeck-Ring 84, D-4400 Münster-Nienberge (DE)**

(74) Vertreter: **Schulze Horn, Stefan, Dipl.-Ing. et al, Patentanwälte Dipl.-Ing. S. Schulze Horn M.SC. Dr. H. Hoffmeister Goldstrasse 36, D-4400 Münster (DE)**

(54) **Fräsvorrichtung zur Entnahme von Futter aus einem Silo-Futterstock.**

(57) Fräsvorrichtung zur Entnahme von Futter aus einem Silo-Futterstock, insbesondere einem Corn cob enthaltenden, mit einer in einer senkrechten Richtung bewegten, an einem Träger befestigten Fräswalze, wobei der Träger (1) als Aufnahmebehälter für das ausgefräste Futter ausgebildet ist und eine Einrichtung zur Wägung des ausgefrästen Futters aufweist.

EP 0 050 272 A1

0050272

Die Erfindung betrifft eine Fräsvorrichtung zur Entnahme von Futter aus einem Silo-Futterstock, insbesondere einem Corn cob enthaltenden, mit einer in einer senkrechten Richtung bewegten, an einem Träger befestigten Fräswalze.

Das Silieren von Viehfutter gewinnt immer stärkere Bedeutung, da insbesondere die in dem Futter vorhandenen Nährwerte besser als bei anderen Aufbewahrungsmethoden bewahrt bleiben. Es ist bereits bekannt, aus einem Silo-Futterstock einzelne Blöcke auszuschneiden, diese zu zerkleinern und zu verteilen. Nachteilig dabei ist, daß mit den Blöcken unter Umständen mehr Futter entnommen wird, als direkt verfüttert wird und daß daher ein Futteranteil zurückbleibt.

Es ist weiterhin bekannt, aus Silo-Futterstöcken mittels in senkrechter Ebene verschwenkbaren Fräsen eine beliebige Menge zu entnehmen. Nachteilig bei diesen bekannten Vorrichtungen ist aber, daß eine genaue Dosierung der Entnahme nicht erfolgt und so auch eine zu große Entnahme mit den daraus resultierenden Nachteilen erfolgen kann.

Es ist demgegenüber Aufgabe der Erfindung, eine Fräsvorrichtung zur Entnahme von Futter aus einem Silo-Futterstock zu schaffen, bei welcher die Entnahme gewichtsmäßig genau bestimmt werden kann und bei welcher es also sicher unterbleibt, daß mehr Futter entnommen wird, als direkt verfüttert wird. Die erfindungsgemäße Fräsvorrichtung soll weiterhin einfach aufgebaut und wirtschaftlich herstellbar sein, sowie langfristig einen störungsfreien Betrieb gewährleisten.

Diese Aufgabe wird bei der eingangs genannten Fräsvorrichtung erfindungsgemäß dadurch gelöst, daß der Träger als Aufnahmebehälter für das ausgefräste Futter ausgebildet ist und eine Einrichtung zur Wägung des ausgefrästen Futters aufweist.

Vorteilhaft besteht im einzelnen der Träger aus einem unteren, das ausgefräste Futter aufnehmenden Teil und einem Deckelteil, wobei ein- oder beidseitig angebrachte Kolben-Zylinder-Anordnungen zum Öffnen des Deckelteils vorhanden sind.

Der Träger kann dabei einen Einsatz zur Aufnahme des Futters aufweisen und zwischen dem Träger und dem Einsatz wirkt ein Wiegegestänge, eine Federwaage, Druckmeßdosen, Abstützungen mit Dehnungsmeßstreifen oder andere, zur Gewichtsbestimmung geeignete Mittel. Der Träger selbst ist vorteilhaft so ausgebildet, daß er am heb- und senkbaren Ausleger eines Traktors oder dergleichen befestigt sein kann, wenn nicht die Befestigung an einem am Traktor angebrachten Rahmen erfolgt. Im letzteren Falle kann dabei der Träger an dem genannten Rahmen auf und ab beweglich gestaltet sein und die Kraftmeßmittel dienen zur Messung der senkrecht von dem Träger ausgeübten Kraft, da die waagerecht wirkenden Kräfte von dem Rahmen aufgenommen werden.

Zur erleichterten Entleerung kann weiterhin der Träger gegenüber dem senkrecht stehenden Rahmen kippbar sein oder der Austrag des Futters aus dem Träger erfolgt über einen unten in diesem angebrachten Kratzboden.

Im folgenden werden Ausführungsbeispiele der Erfindung anhand von Zeichnungen näher beschrieben. Es zeigen:

Figur 1 perspektivisch im Schema eine an einem Ausleger eines Traktors oder dergleichen befestigte Vorrichtung gemäß der Erfindung,

Figur 2 einen Längsschnitt durch die Vorrichtung gemäß der Erfindung und

Figur 3 schematisch eine andere Ausführungsform der erfindungsgemäßen Vorrichtung.

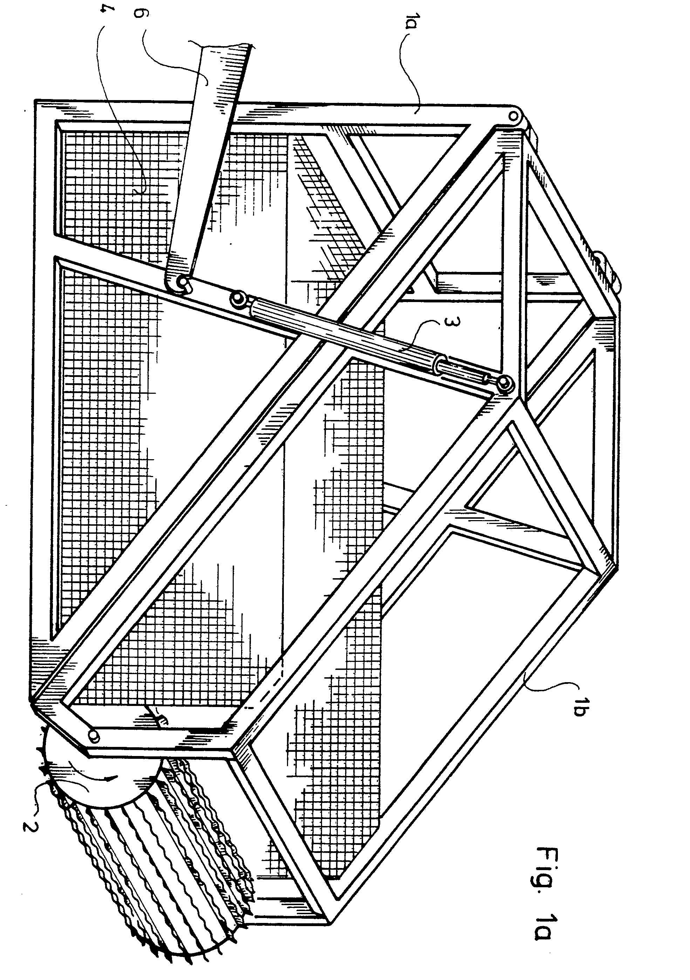

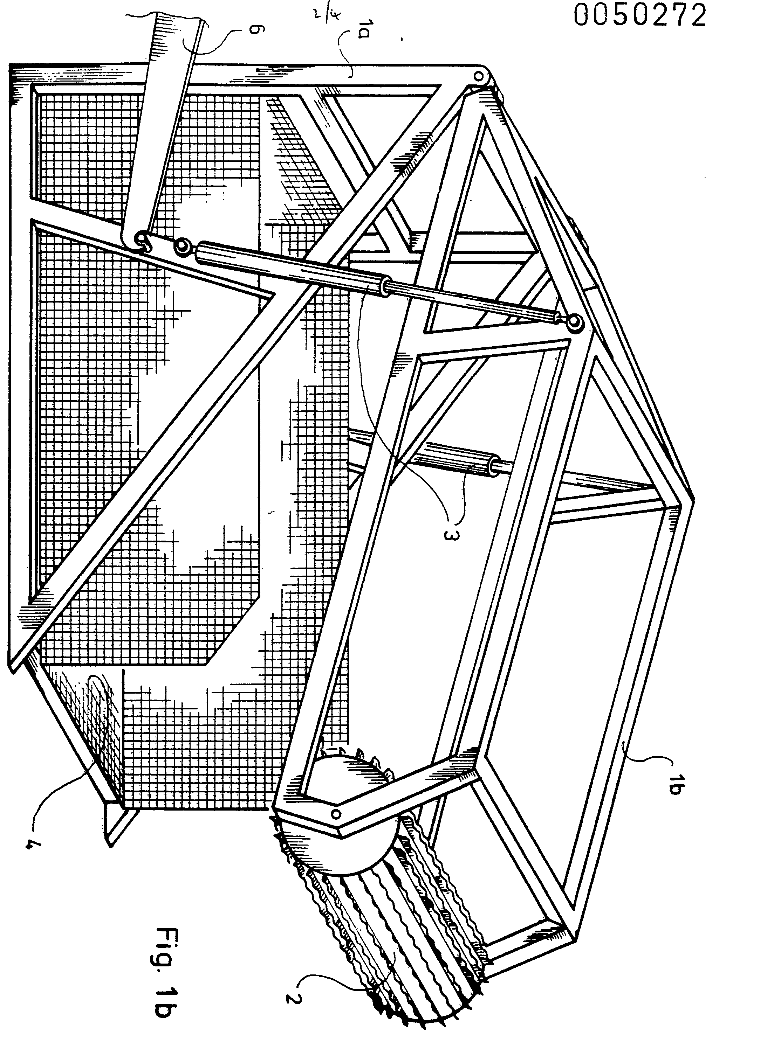

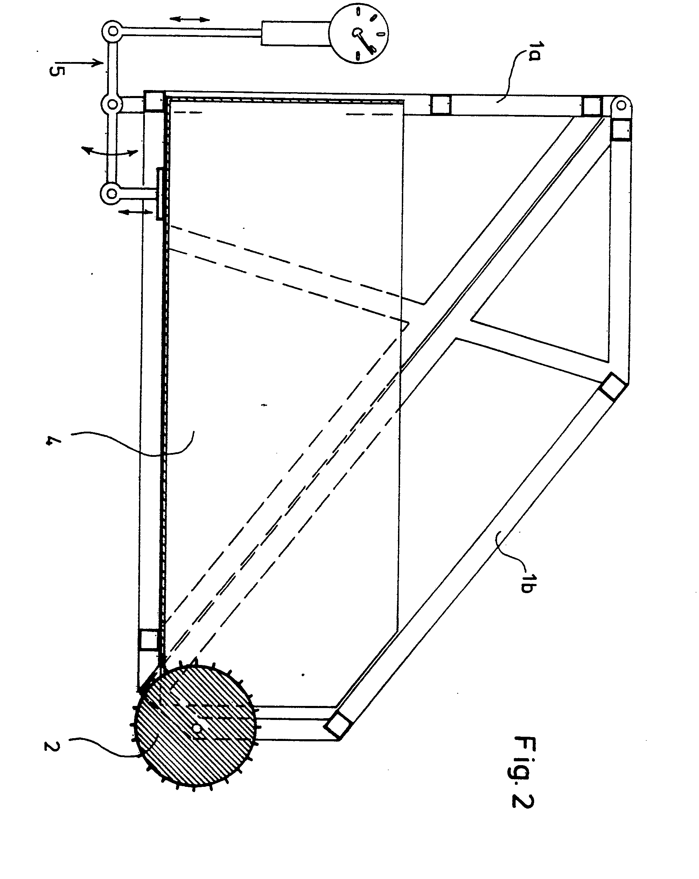

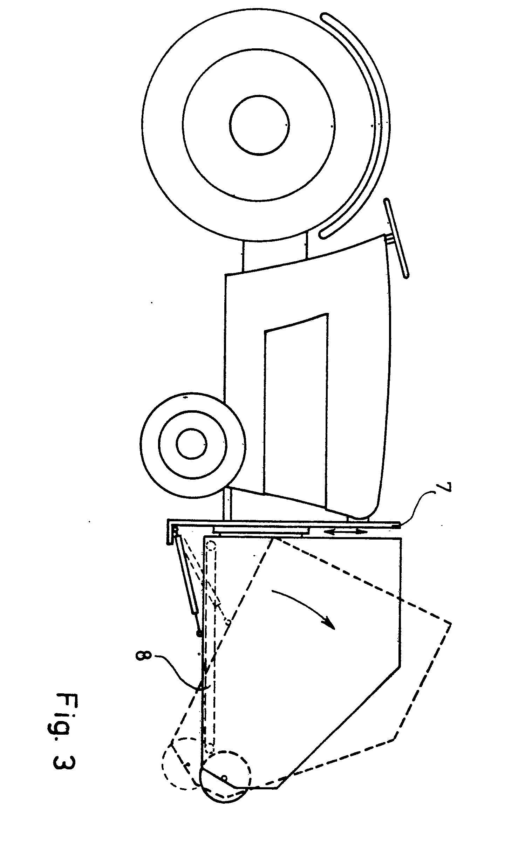

Gemäß den Figuren besteht die erfindungsgemäße Fräsvorrichtung aus einem Träger 1 mit einem unteren Teil 1a und einem Deckelteil 1b. Vorn an dem Träger 1 ist eine Fräswalze 2 befestigt, die hydraulisch angetrieben ist und deren Oberfläche derart ausgebildet ist, daß auch feste Silo-Futterstöcke entleert werden können, z. B. solche, die Corn cob enthalten. Zwischen dem unteren Teil 1a und dem Deckelteil 1b des Trägers 1 wirken ein- oder beidseitig Kolben-Zylinder-Anordnungen 3, die ein Öffnen des Deckelteils zum Austrag des gefrästen und gewogenen Futters ermöglichen. Gemäß Figur 2 kann in einem Ausführungsbeispiel der Erfindung der Träger 1 einen Einsatz 4 aufweisen, welcher über ein Wiegegestänge 5 mit Gewichten oder einer Federwaage verbunden ist. Das eingefräste Futter wird jetzt fortlaufend und automatisch gewogen, so daß die benötigte Futtermenge exakt bestimmt werden kann. Dadurch wird vermieden, daß zuviel Futter aus dem Futterstock entnommen wird und vor der Verfütterung verdirbt. Der Träger 1 kann gemäß Figur 1 an einem Ausleger 6 eines Traktors oder dergleichen Fahrzeug befestigt sein, gemäß Figur 3 kann der Träger 1 aber auch an einem senkrechten Rahmen 7 eines Fahrzeuges angesetzt sein und wird hydraulisch in einer senkrechten Ebene auf und ab bewegt. Während dieser Bewegung erfolgt die Fräsung des Futters mit der vorstehend beschriebenen automatischen Wägung.

Um eine einfache Ausbringung der festgelegten Futtermenge aus dem Träger 1 zu ermöglichen, kann dieser unten einen Kratzboden 8 aufweisen, er kann aber auch gemäß Figur 3 kippbar sein, wobei dann die Fräse, ggf. nach Umsteuerung der Drehrichtung, den Austrag unterstützt.

Der Erfindungsgegenstand bietet ersichtlicherweise bei einfachem Aufbau ehebliche Vorteile gegenüber bisher bekannten Fräsvorrichtungen und angesichts der erzielbaren Vorteile kann von einer idealen Lösung der anstehenden Probleme gesprochen werden.

Hinsichtlich der Wiegevorrichtung kann für den Fachmann selbstverständlich auch eine Wägung mittels Druckmeßdosen, Dehnungsmeßstreifen und dergleichen erfolgen, wobei dann die Anzeige für den Fahrer des die erfindungsgemäße Fräsvorrichtung tragenden Fahrzeugs elektrisch und digital erfolgen kann. Die Fräswalze 2 ist an dem Deckelteil 1b angebracht und durch Betätigung der Kolben-Zylinder-Anordnung 3 kann dadurch die Fräswalze in vertikaler Richtung geschwenkt werden. Vor dem Fräsvorgang wird also der Deckelteil 1b geöffnet und dann wird während des Fräsvorganges die Fräswalze 2 durch Zusammenziehen der gegebenenfalls doppelt wirkenden Kolben-Zylinder-Anordnung nach unten bewegt, soweit dies nicht durch Schwerkrafteinfluß ausreichend erfolgt. Zwischen dem unteren Teil 1a und dem Deckelteil 1b des Trägers 1 ist eine Verriegelungseinrichtung angebracht, die vom Fahrersitz des den Träger tragenden Fahrzeuges fernbedient werden kann. Da die Kolben-Zylinder-Anordnung 3 einerseits an dem den unteren Teil 1a des Trägers haltenden Ausleger 6 und dem Deckelteil 1b andererseits angelenkt ist, kann bei geschlossenem Deckelteil (die Arretierungseinrichtung ist wirksam) durch Ausfahren des Kolbens der Kolben-Zylinder-Anordnung 3 der Träger 1 fräswalzenseitig nach unten gekippt werden. Zu diesem Zweck hält der Ausleger 6 den Träger 1 verschwenkbar über in Endaussparungen eingelegte Bolzen. Nach dem Verschwenken wird dann die Arretierungseinrichtung gelöst und durch weiteres Ausfahren des Kolbens der Kolben-Zylinderanordnung 3 wird der Deckelteil angehoben, wobei das Futter ausgekippt oder durch die rotierende Fräswalze gesteuert ausgetragen wird. Je nach Grad der Kippung und nach Art des bearbeiteten Futters kann dabei die Drehrichtung der Fräswalze rechts oder links herum sein.

Die Kolben-Zylinder-Anordnung 3 dient also zwei Funktionen, nämlich dem Fräsvorgang und der dosierten Austragung des Futters nach Kippung des Trägers 1.

P a t e n t a n s p r ü c h e :

1. Fräsvorrichtung zur Entnahme von Futter aus einem Silo-Futterstock, insbesondere einem Corn cob enthaltenden, mit einer in einer senkrechten Richtung bewegten, an einem Träger befestigten Fräswalze, dadurch gekennzeichnet, daß der Träger (1) als Aufnahmebehälter für das ausgefräste Futter ausgebildet ist und eine Einrichtung zur Wägung des ausgefrästen Futters aufweist.

2. Fräsvorrichtung nach Anspruch 1, dadurch gekennzeichnet, daß der Träger (1) aus einem unteren, das ausgefräste Futter aufnehmenden Teil (1a) und einem Deckelteil (1b) besteht und ein- oder beidseitig angebrachte Kolben-Zylinderanordnungen (3) zum Öffnen des Deckelteils (1b) aufweist.

3. Fräsvorrichtung nach Anspruch 1 oder 2, dadurch gekennzeichnet, daß der Träger (1) einen Einsatz (4) zur Aufnahme des Futters aufweist und zwischen dem Träger (1) und dem Einsatz (4) ein Wiegegestänge (5), eine Federwaage, Druckmeßdosen, Abstützungen mit Dehnungsmeßstreifen oder andere, zur Gewichtsbestimmung geeignete Mittel wirksam sind.

4. Fräsvorrichtung nach Anspruch 1 bis 3, dadurch gekennzeichnet, daß der Träger (1) am heb- und senkbaren Ausleger (6) eines Traktors oder dergleichen befestigt ist.

5. Fräsvorrichtung nach Anspruch 1 bis 4, dadurch gekennzeichnet, daß der Träger (1) an einem senkrecht stehenden Rahmen (7) auf und ab beweglich gestaltet ist und daß die Kraftmeßmittel zur Messung der senkrecht von dem Träger ausgeübten Kraft ausgebildet sind.

0050272

6. Fräsvorrichtung nach Anspruch 1 bis 5, dadurch gekennzeichnet, daß der Träger (1) gegenüber dem senkrecht stehenden Rahmen kippbar ist.

7. Fräsvorrichtung nach Anspruch 1 bis 6, dadurch gekennzeichnet, daß der Träger unten einen Kratzboden aufweist.

8. Fräsvorrichtung nach Anspruch 1 bis 7, dadurch gekennzeichnet, daß die Fräswalze (2) an dem Deckelteil (1b) befestigt ist, die Kolben-Zylinderanordnung (3) doppelt wirkend ist und die Vertikalbewegung der Fräswalze durch Heben und Senken des Deckelteiles (1b) erfolgt.

9. Fräsvorrichtung nach Anspruch 1 bis 8, gekennzeichnet durch einen Verriegelungsmechanismus zwischen dem unteren und dem Deckelteil des Trägers (1).

10. Fräsvorrichtung nach Anspruch 1 bis 9, dadurch gekennzeichnet, daß die Kolben-Zylinderanordnung (3) einerseits an dem den unteren Teil (1a) des Trägers haltenden Ausleger (6) und andererseits an dem Deckelteil (1b) angelenkt ist.

Fig. 1a

1/4

0050272

0050272

Fig. 1b

0050272

Fig.2

Fig. 3

7

8

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE – U – 7 614 578 (M. THALER) <br> * Ansprüche 1, 6 * <br> –– | 1,2, <br> 4,6 |
| | LANDTECHNIK, Nr. 1, Januar 1976 <br> P. RUBITSCHEK "Die Mechanisierung der Rindviehfütterung und des Melkens in den USA" <br> Seite 5 <br> –– | 1 |
| | US – A – 2 635 868 (G.C. REID et al.) <br> * Anspruch 1, Spalte 1, Zeilen 1 bis 23 * <br> –– | 3,4 |
| | US – A – 2 851 171 (H.W. MARTIN et al.) <br> * Anspruch 1; Spalte 1, Zeilen 22 bis 30 * <br> –– | 3,4 |
| A | DE – A – 2 301 024 (B. STRAUTMANN & SÖHNE) <br> –––– | |

**KLASSIFIKATION DER ANMELDUNG (Int. Cl.³)**

A 01 F   25/20
G 01 G   19/08

**RECHERCHIERTE SACHGEBIETE (Int. Cl.³)**

A 01 F   25/00
A 01 F   29/00
A 01 K    5/00
B 60 P    5/00
G 01 G   19/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 03-12-1981 | KESTEN |

EPA form 1503.1   06.78